# EUROPEAN PATENT APPLICATION

(11) **EP 4 773 152 A1**
(43) Date of publication of application: **08.07.2026**
(21) Application number: 24860343.3
(22) Date of filing: 26.08.2024
(51) Int. Cl.: G21F 9/34, G21F 5/06

(54) **CONCRETE OVERPACKING STRUCTURE FOR HIGH INTEGRITY CONTAINER**

(30) Priority: 01.09.2023 KR 20230116441
(71) Applicant: Korea Hydro & Nuclear Power Co., Ltd, Gyeongju-si, Gyeongsangbuk-do 38120 (KR)
(72) Inventor: HWANG, Young Hwan, Daejeon 34101 (KR); HWANG, Seok-Ju, Daejeon 34101 (KR); LEE, Mi-Hyun, Daejeon 34101 (KR); SON, Jung-Kwon, Daejeon 34101 (KR); KIM, Cheon-Woo, Daejeon 34101 (KR)
(74) Representative: Winter, Brandl - Partnerschaft mbB
(86) International application number: PCT/KR2024/012664
(87) International publication number: WO 2025/048423

(57) **Abstract**

A concrete overpacking structure for a high-integrity container is disclosed.

The concrete overpacking structure for the high-integrity container as a concrete structure for overpacking while loading and storing high-integrity containers (HICs) containing radioactive waste, includes a structure body having a concrete container part and a concrete cover part for overpacking the high-integrity container; and a sampling port part formed on a side of the structure body while forming a sample for collection for evaluating the resistance characteristics of the structure body.

## Description

### CROSS-REFERENCE TO RELATED APPLICATION

This application claims priority to and the benefit of Korean Patent Application No. 10-2023-0116441 filed with the Korean Intellectual Property Office on September 1, 2023, the entire contents of which are incorporated herein by reference.

### BACKGROUND OF THE INVENTION

### (a) Field of the Invention

The present disclosure relates to a concrete overpacking structure for a high-integrity container.

### (b) Description of the Related Art

Generally, various types of highly radioactive waste (e.g., waste resins) generated during an operation of a nuclear power plant are temporarily stored in high-integrity containers (HICs).

In order to dispose of high-integrity containers containing radioactive wastes, disposal suitability (disposal acceptability and disposal safety) that satisfies the disposal facility's acceptance criteria (mechanical resistance and chemical resistance) is required.

Accordingly, the high-integrity containers are loaded into a concrete overpacking structure (a container shape) side and stored and disposed of in an overpacked state.

Concrete overpacking structures have the advantage of being able to overpack high-integrity containers while ensuring mechanical resistance (strength) due to the characteristics of concrete materials.

However, since most of these concrete overpacking structures are manufactured as single-piece molding through concrete molding work (pouring and curing), there is a disadvantage in that it is difficult to test whether mechanical resistance characteristics, which are basic requirements required of the overpacking structure itself, are suitable through sampling, etc.

Therefore, the existing concrete overpacking structure has limitations in securing a satisfactory overpacking safety and reliability.

### SUMMARY OF THE INVENTION

### [Technical Problem]

The present disclosure has been devised to solve the above-mentioned problems, and the purpose of the present disclosure is to provide a concrete overpacking structure for a high-integrity container formed so as to facilitate an overpacking process of the high-integrity container, and in particular, to facilitate a collection of samples for evaluating self-resistance characteristics.

### [Technical Solution]

In order to achieve the purpose,

As a concrete structure for overpacking while loading and storing a high-integrity container (HIC) containing radioactive waste,
a concrete overpacking structure for the high-integrity container including a structure body having a concrete container part and a concrete cover part for overpacking the high-integrity container; and
a sampling port part formed on a side of the structure body while forming a sample for collection for evaluating resistance characteristics of the structure body is provided.

### [Advantageous Effects]

The present disclosure may provide the structure capable of overpacking the high-integrity container containing the radioactive waste (e.g., waste resins) into a loading and storage state in which a disposal suitability can be secured by using the structure body (the concrete container part and the concrete cover part).

In particular, the sampling port part is formed on a side of the structure body, and this sampling port part is formed to have the structure that facilitates the extraction and collection of the samples for evaluating the self-resistance characteristics of the structure body.

Accordingly, the present disclosure not only enables the overpacking of the high-integrity container to ensure the suitability for the disposal, but also facilitates the quality control of the structure in a state consistent with securing suitability for the disposal through the sampling of the structure body of the concrete structure, and thus may be expected to have the effect of further enhancing the safety and reliability of the overpacking.

### BRIEF DESCRIPTION OF THE DRAWINGS

FIG. 1 is a view schematically showing an entire structure of a concrete overpacking structure for a high-integrity container according to one embodiment of the present disclosure.
FIG. 2 to FIG. 8 are views for explaining detailed structures and operations of a concrete overpacking structure for a high-integrity container according to one embodiment of the present disclosure.

### DETAILED DESCRIPTION OF THE EMBODIMENTS

Hereinafter, a preferred embodiment of the present disclosure will be described with reference to the attached drawings.

Embodiments of the present disclosure are described within a range that allows those with average knowledge in the art to practice the present disclosure.

Accordingly, since the embodiments of the present disclosure can be modified into various different forms, the scope of the claims of the present disclosure is not limited to the embodiments described below.

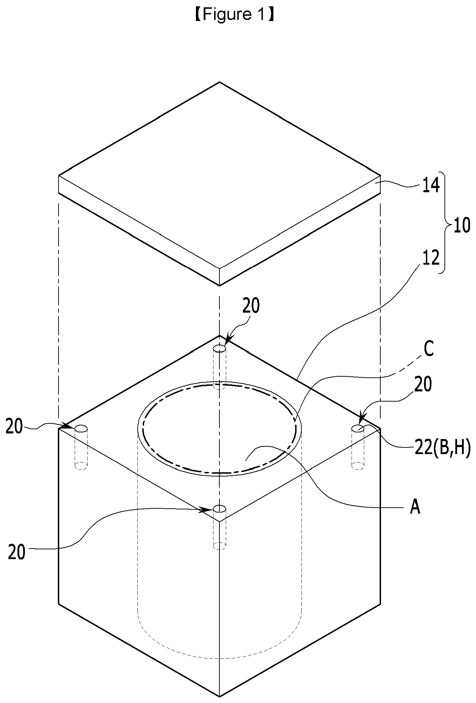

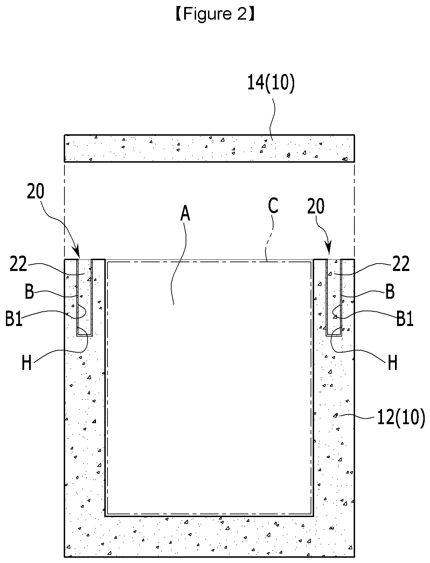

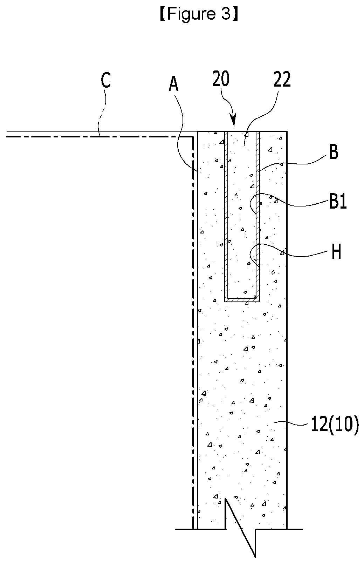

FIG. 1 is a view schematically showing an entire structure of a concrete overpacking structure for a high-integrity container according to one embodiment of the present disclosure, and FIG. 2 to FIG. 8 are views for explaining detailed structures and operations.

Referring to FIGS. 1 to 6, a concrete overpacking structure for a high-integrity container according to one embodiment includes a structure body 10 and a sampling port part 20, and is formed so that a high-integrity container C may be overpacked in a state in which it is reinforced to ensure a suitability for a disposal.

The high-integrity container C may be made of a container shape of a polymer material (e.g., polyethylene) and basically requires a container structure that may safely store a highly radioactive waste, such as waste resins generated during an operation of a nuclear power plant, in a sealed state.

In particular, the high-integrity container C is required to have mechanical strength characteristics (e.g., a compressive strength, a tensile strength, and a creep stability) that may satisfy the suitability for the disposal while containing radioactive waste, and in addition to the mechanical strength characteristics, a groundwater infiltration resistance, a corrosion resistance, a microbial decomposition resistance, a degradation stability, and a contact reaction stability may be required.

Therefore, the structure body 10 is required to be formed by a concrete molding method including concrete pouring and curing processes, but to have a structure that may be subjected to an overpacking process in a state that may secure the suitability for the disposal of the high-integrity container C.

Referring to FIG. 1 and FIG. 2, the structure body 10 is formed by including a concrete container part 12 and a concrete cover part 14 for overpacking of the high-integrity container C.

The concrete container part 12 and the concrete cover part 14 are each formed using a conventional concrete molding method, but are formed to form a concrete structure having an overpacking resistance characteristic that is compatible with securing the disposal suitability of the high-integrity container C.

That is, the concrete container part 12 has a loading space A of the high-integrity container C, and the outer shape may be formed to have, for example, a polygonal container or a cylindrical concrete container structure shape according to required conditions.

The concrete cover part 14 may be formed to have a plate-shaped concrete structure shape that may seal and block the opening A1 side of the loading space A of the concrete container part 12.

The concrete container part 12 and the concrete cover part 14 may each be formed by using a concrete molding raw material suitable for enabling the implementation of the required resistance characteristics during an overpacking process.

For example, the concrete container part 12 and the concrete cover part 14 may each be formed in a form of a polymer concrete structure that is molded using a polymer as a binding material.

In particular, the polymer concrete has excellent material properties such as excellent compressive strength, waterproofness, watertightness, and wear resistance, and excellent resistance to various acids, alkalis, and salts, so that the mechanical resistance and chemical resistance properties required for the structure body 10 of the present disclosure may be easily secured.

The structure body 10 may be formed by a molding process using, for example, a concrete molding raw material that uses cement as a binding material, and may also be formed by various concrete molding raw materials and molding methods that satisfy the purpose of the present disclosure.

Meanwhile, the sampling port part 20 provides a sample for evaluation the overpacking resistance characteristics of the structure body 10, and is formed integrally on the structure body 10 side in a state where the sample may be easily withdrawn from the structure body 10.

In particular, the sampling port part 20 is formed integrally on the side of the structure body 10 in a state in which it is formed to form a port structure that facilitates a sample extraction in conjunction with the forming operation of the structure body 10.

That is, the sampling port part 20 may be provided with a sample 22 for a collection as shown in FIG. 1 to FIG. 3, and may be configured to have a structure in which a port hole H is formed on the inside of the structure body 10 by a port release material B in conjunction with the molding operation of the structure body 10, and the sample 22 for the collection is molded and formed in a state in which it may be withdrawn and collected on the side of the port hole H.

The port release material B may be formed in a cylindrical or polygonal cylinder shape that matches the required molding shape of the sample 22 for the collection, and may be formed in a state in which the inner side has a heterogeneous space B1 with an opened upper portion.

The port release material B for the port may be made of paper or film, and may be selected from among materials having a surface structure or material properties that particularly enable a stable surface release action.

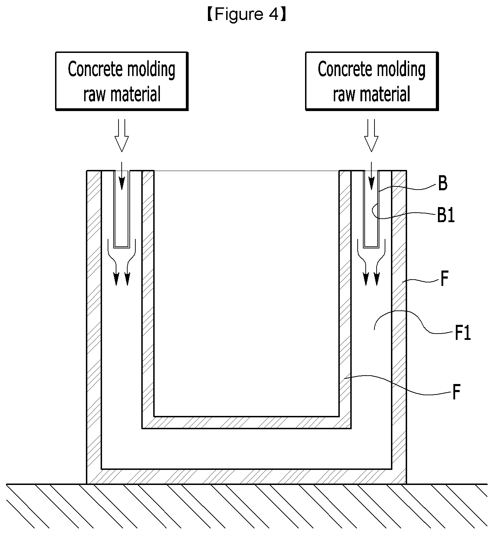

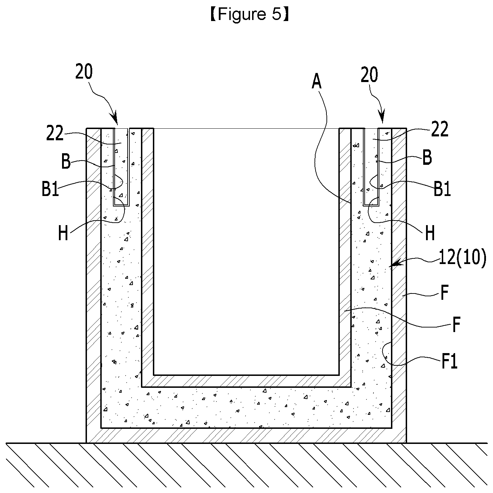

For example, as shown in FIG. 4 and FIG. 5, the sampling port part 20 may be formed in a state in which the sample 22 for the collection is formed integrally with the container part 12 by pouring and curing the concrete molding raw material while setting the port release material B on the molding space F1 side between inner and outer forming molds F during the molding of the concrete container part 12.

At this time, the port release material B is set in a state where the opened side of the heterogeneous space B1 may be exposed at the upper surface point of the concrete container C.

Then, the port release material B may act as a kind of a port mold that allows the port hole H and the sample 22 for the collection to be formed inside the container part 12 in conjunction with the molding work of the concrete container part 12, and may also play a role in inducing (a release operation) the extraction of the sample 22 for the collection from the port hole H.

Accordingly, a port hole H may be formed on the upper part of the completely molded concrete container part 12 as shown in FIG. 5 by a port release material B, and a sampling port 20 may be formed inside the port hole H in a state where a sample 22 for collection is molded while being wrapped by the port release member B.

This sampling port part 20 may be not only integrally formed on the side of the structure body 10 in the same state as a concrete molding environment and conditions of the structure body 10, but may also provide a port structure that allows the sample 22 for the collection to be easily withdrawn from the outside of the structure body 10.

The sampling port part 20 may be formed on the side of the structure body 10, and may be formed at one or more points on the side of the structure body 10, as shown in FIG. 1, so as to enable evaluation of the overpacking resistance characteristics (e.g., a compressive strength) that are compatible with securing the disposal suitability of the high-integrity container C.

Such the sampling port part 20 may provide the sample 22 for collection in the molded state that may be easily taken out and collected, especially under the same molding environment and conditions as the structure body 10, and thus may further increase work efficiency and reliability for evaluating the resistance characteristics of the structure body 10.

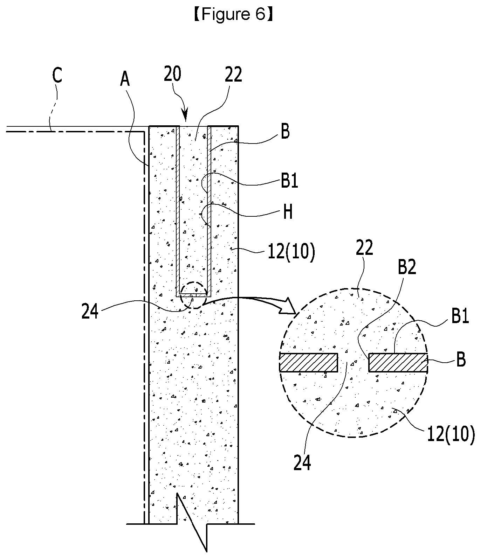

The sampling port part 20 may be formed to have a joint part 24 connecting the sample 22 for the collection and the port hole H as shown in FIG. 6.

For example, the joint part 24 may be formed by performing a molding operation while forming a joint hole B2 on the side of the port release material B as in FIG. 6, thereby connecting the inner surface of the port hole H and one side of the outer surface of the sample 22 for the collection to each other through the hole part.

The joint part 24 holds the sample 22 for the collection at the port hole H side, but is formed to have a joint structure that may be easily cut by an external force when the sample 22 for the collection is withdrawn, thereby increasing the molding stability of the sample 22 for the collection.

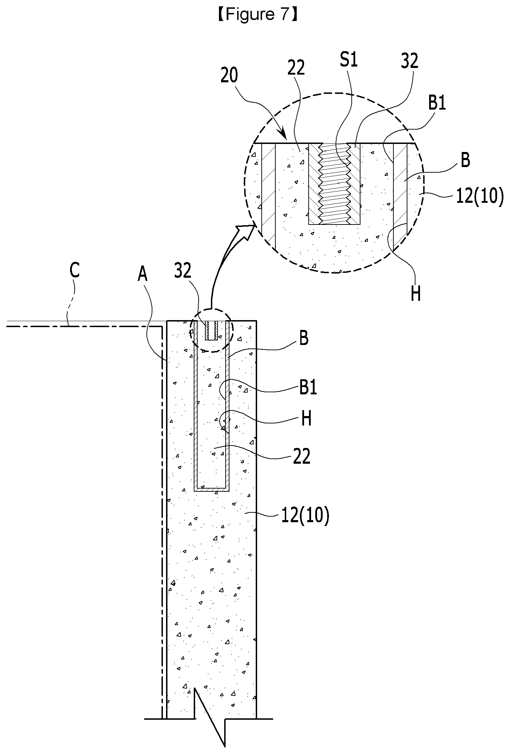

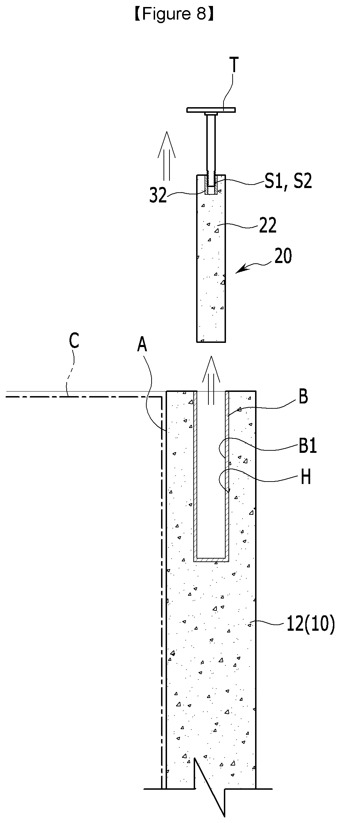

Referring to FIG. 7 and FIG. 8, the concrete overpacking structure for the high-integrity container according to one embodiment of the present disclosure may further include a withdrawal connection part 30 corresponding to the sampling port part 20.

The withdrawal connection part 30 is formed to have a connection structure to match that the operator may easily pull out one side (the upper part) of the sample 22 when extracting the sample 22 for collection from the outside of the structure body 10.

The withdrawal connection part 30 is provided with a connection insert 32 as shown in FIG. 7, and this connection insert 32 may be set in a state of being inserted and placed on the upper side of the sample 22 for collection of the sampling port part 20.

The connecting insert 32 may be formed in a form of a nut with a female screw part S1 formed, for example, as in FIG. 7, and may be set so that one end of the female screw part S1 is exposed to the upper side of the sample 22 for the collection.

The connecting insert 32 may be formed and fixed in an integrally inserted position on the side of the sample 22 for the collection as in FIG. 7, for example, by an insert molding during the molding of the sampling port part 20.

This withdrawal connection part 30 may provide a connection fixing force that matches the withdrawal operation when withdrawing the sample 22 for the collection from the sampling port 20 on the structure body 10 side.

For example, as shown in FIG. 8, by pulling out a tool T as a withdrawal operation type while a male screw part S2 of the separate tool T is fastened and connected to the female screw part S1 side of the connecting insert 32, the sample 22 for the collection may be withdrawn more simply and easily from the port hole H.

Therefore, the withdrawal connection part 30 may further improve work convenience and efficiency when extracting and collecting the sample 22 for the collection of the sampling port part 20 from the structure body 10.

Accordingly, the present disclosure provides the structure in which the high-integrity container C including various types of radioactive waste generated during the operation of a nuclear power plant is subjected to the overpacking while being loaded, and in which the mechanical resistance may be further secured by using the concrete container part 12 and the concrete cover part 14 of the structure body 10.

Furthermore, the present disclosure is formed to have the structure in which the sampling port part 20 for providing the sample 22 for the collection for evaluating the required resistance characteristics on the structure body 10 side is integrally formed on the structure body 10 side, and so as to have the structure that may be easily withdrawn and collected in the state having the same concrete molding characteristics as the structure body 10.

Therefore, the present disclosure may implement the concrete overpacking structure that is formed to have the resistance characteristics that are compatible with securing the disposal suitability of the high-integrity container C, and may easily manage the overpacking quality through the resistance characteristic evaluation by simple sampling.

## Claims

1. A concrete overpacking structure for a high-integrity container as a concrete structure for overpacking while loading and storing high-integrity containers (HICs) containing radioactive waste, comprising:
a structure body having a concrete container part and a concrete cover part for overpacking the high-integrity container; and
a sampling port part formed on a side of the structure body while forming a sample for collection for evaluating the resistance characteristics of the structure body.

2. The concrete overpacking structure for the high-integrity container of claim 1, wherein:
the concrete container part and the concrete cover part are formed in a form of a concrete structure molded by a concrete molding method.

3. The concrete overpacking structure for the high-integrity container of claim 1, wherein:
the sampling port part is provided with a port release material having a release space with one opened side, and
the port release material is formed while surrounding a sample for collection on a port hole side of the structure body.

4. The concrete overpacking structure for the high-integrity container of claim 3, wherein:
the sampling port part is **characterized in that** a port hole is formed on the outer side of the perimeter of the release space of the port release material in conjunction with the concrete molding work of the structure body, and the sample for collection is formed on the inner side.

5. The concrete overpacking structure for the high-integrity container of claim 3, wherein:
the sampling port part is further equipped with a joint part, and
the joint part is formed while connecting the port hole and the sample for collection with the port release material interposed therebetween.

6. The concrete overpacking structure for the high-integrity container of claim 1, wherein:
the concrete overpacking structure for the high-integrity container further includes a withdrawal connection part, and
the withdrawal connection part is equipped with a connecting insert with a female screw formed therein, and
the connecting insert is **characterized in that** one side of the female screw part is formed on the side of the sample for collection in a state where it is exposed to the outside.
